# EUROPÄISCHE PATENTSCHRIFT

(11) **EP 0 752 939 B1**
(45) Veröffentlichungstag und Bekanntmachung des Hinweises auf die Patenterteilung: **11.11.1998**
(21) Anmeldenummer: 96901333.3
(22) Anmeldetag: 30.01.1996
(51) Int. Cl.: B60T 8/32, B60T 13/66

(54) **VERFAHREN ZUM BETRIEB EINES ELEKTRONISCH REGELBAREN BREMSBETÄTIGUNGSSYSTEMS**
PROCESS FOR OPERATING AN ELECTRONICALLY CONTROLLED BRAKE ACTUATING SYSTEM
PROCEDE POUR FAIRE FONCTIONNER UN SYSTEME D'ACTIONNEMENT DE FREINS A REGULATION ELECTRONIQUE

(30) Priorität: 31.01.1995 DE 19502925
(43) Veröffentlichungstag der Anmeldung: 15.01.1997
(73) Patentinhaber: ITT Automotive Europe GmbH, 60488 Frankfurt (DE)
(72) Erfinder: FEIGEL, Hans-Jörg, D-61191 Rosbach (DE); KLEIN, Andreas, D-61350 Bad Homburg (DE); NEUMANN, Ulrich, D-64380 Ro dorf (DE); SCHIEL, Lothar, D-65719 Hofheim (DE)
(74) Vertreter: Dusil, Vladimir, Dipl.-Ing.
(86) Internationale Anmeldenummer: EP9600355
(87) Internationale Veröffentlichungsnummer: WO9623678

(56) Entgegenhaltungen:
- DE-A- 3 424 912
- DE-A- 4 029 793
- DE-C- 4 102 497
- DE-C- 4 329 140
- DE-C- 4 335 769
- GB-A- 2 100 816
- US-A- 4 756 391
- US-A- 4 812 777
- US-A- 5 312 172

## Beschreibung

Die Erfindung betrifft ein Verfahren zum Betrieb eines elektronisch regelbaren Bremsbetätigungssystems für blockiergeschützte Kraftfahrzeugbremsanlagen, mit einem mittels eines Betätigungspedals betätigbaren Hauptbremszylinder, mit durch eine elektronische Steuereinheit betätigbaren Bremsdruckgebern, an die Radbremsen des Fahrzeuges angeschlossen sind und die über mittels elektromagnetisch schaltbarer, durch die elektronische Steuereinheit ansteuerbarer Trennventile absperrbare hydraulische Verbindungen mit dem Hauptbremszylinder verbindbar sind, mit mindestens einer Sensoreinrichtung zur Erkennung des Fahrerverzögerungswunsches sowie mit mindestens einer mit dem Hauptbremszylinder zusammenwirkenden, von einem Kolben begrenzten Simulatorkammer, wobei beim Einleiten eines Bremsvorgangs die Trennventile mit einer zeitlichen Verzögerung geschaltet werden und ein die am Betätigungspedal auftretende Geschwindigkeit repräsentierendes Signal ermittelt wird.

Ein derartiges Verfahren ist z.B. aus der DE 41 02 497 C1 bekannt. Das Absperren der hydraulischen Verbindungen zwischen den Bremsdruckgebern und dem Hauptbremszylinder erfolgt in Abhängigkeit von einem Schwellenwert der Pedalbetätigungsgeschwindigkeit durch eine gegenüber dem Zeitpunkt der Pedalbetätigung zeitverzögerte Ansteuerung der Trennventile. Um ABS-Regelvorgänge durchführen zu können sind die von den elektrohydraulisch betätigbaren Bremsdruckgebern zu den Radbremsen führenden hydraulischen Verbindungen an ein ABS-Hydroaggregat angeschlossen, das in einem ABS-Regelfall die erforderliche Bremsdruckmodulation ermöglicht.

Als Nachteil wird bei dem bekannten Bremsbetätigungsverfahren die Tatsache empfunden, daß aufgrund unterschiedlicher Betätigungsgeschwindigkeiten das Flüssigkeitsvolumen, welches zum Vorfüllen der Radbremsen aus dem Hauptbremszylinder über die Trennventile verdrängt wird, nach dem zeitgesteuerten Schließen der Trennventile zum einen nicht genau definiert ist und damit aus dem von den Bremsdruckgebern verdrängten Volumen nicht auf den in den Radbremsen herrschenden Druck geschlossen werden kann, und daß zum anderen die Trennventile bei langsamen Betätigungsgeschwindigkeiten eine Zeit lang geöffnet bleiben, was das Pedalgefühl nachteilig beeinflußt. Weiterhin ist die Verwendung des ABS-Hydroaggregats mit einem hohen Bauaufwand verbunden.

Es ist daher Aufgabe der vorliegenden Erfindung, ein Verfahren zum Betrieb eines Bremsbetätigungssystems der eingangs genannten Gattung vorzuschlagen, bei dessen Durchführung die vorhin erwähnten Nachteile eliminiert werden, so daß der Ausgangszustand der Radbremsen nach dem Schließen der Trennventile bekannt ist, und ein unnötiges Offenhalten der Trennventile bei langsamer Betätigung vermieden wird. Außerdem sollen ABS-Regelvorgänge unter Verwendung der in der Bremsanlage ohnehin vorhandenen Teile durchgeführt werden können.

Die erfindungsgemäße Lösung der Aufgabe besteht darin, daß die Bremsdruckgeber elektromechanisch betätigbar ausgebildet sind und ihre Bremsdruckgeberkolben nach Beendigung des Bremsvorgangs in eine Ausgangslage bringbar sind, die einen Rückhub ermöglicht, wobei an die Bremsdruckgeber die Radbremsen direkt angeschlossen sind, daß beim Einleiten eines Bremsvorgangs ein die Position des Hauptbremszylinderkolbens repräsentierendes Signal ermittelt wird und daß die Länge der zeitlichen Verzögerung, mit der die Trennventile nach dem Einleiten des Bremsvorgangs geschlossen werden, aus mindestens einem der die am Betätigungspedal auftretende Geschwindigkeit und die Position des Hauptbremszylinderkolbens repräsentierenden Signale ermittelt wird.

Die Ermittlung der Position des Hauptbremszylinderkolbens erfolgt vorzugsweise dadurch, daß der Betätigungsweg am Betätigungspedal sensiert wird.

Um das die am Betätigungspedal auftretende Betätigungsgeschwindigkeit repräsentierende Signal zu gewinnen, wird das dem Betätigungsweg entsprechende Signal nach einem Merkmal einer vorteilhaften Ausführungsform einer zeitlich differenzierenden Verarbeitung unterworfen.

Das verzögerte Schließen der Trennventile hat zwar den hier angeführten Vorteil, daß durch das aus dem Hauptzylinder verdrängte Volumen der Druckaufbau in den Radbremsen unterstützt wird, bezüglich des Pedalgefühls wirkt es sich jedoch nachteilig aus, weil hierdurch der Pedalweg ungewünscht verlängert wird. Angestrebt wird, daß die Bremdruckgeber bei Einleitung des Bremsvorgangs die Radbremsen vorfüllen (Springerfunktion). Würden die Trennventile bei einem langsamen Betätigungsvorgang offenbleiben, bestünde sogar die Gefahr, daß Volumen aus der Bremsanlage von den Bremdruckgebern durch die Schnüffellöcher in den Behälter verdrängt wird. Man wird daher grundsätzlich anstreben, die Trennventile möglichst schnell zu schließen. Ein verzögertes Schließen der Trennventile sollte daher auf die extrem hochdynamischen Bremsvorgänge begrenzt bleiben, bei denen die Betätigungsgeschwindigkeit einen bestimmten Wert überschreitet. Dies ist immer dann der Fall, wenn ein geforderter Bremdruckaufbau in den Radbremsen (Spezifikationswert, nicht die aus den Sensoren zur Ermittlung des Fahrerverzögerungswunsches ermittelte Größe) von den Bremsdruckgebern allein nicht erreicht werden kann. Dies kann auslegungsbedingt (z.B. sehr große Volumenaufnahme der Radbremsen) und/oder zustandsbedingt sein (z.B. geringe Motordynamik wegen niedriger Bordnetzspannung). Es ist daher sinnvoll, den vorbestimmten Wert für die Grenzbetätigungsgeschwindigkeit von der aktuell erreichbaren Bremsdruckgeberdynamik abhängig zu machen. Hierbei kann eine mögliche Ursache (geringe Versorgungsspannung) oder die Wirkung (geringe Hochlaufdynamik) als Einflußgröße herangezogen werden.

Ist eine Mindestbetätigungsgeschwindigkeit ermittelt worden, so daß die Ventile nicht direkt geschlossen werden, so ist es sinnvoll, die Trennventile jedoch zu schließen, wenn ein bestimmtes Volumen im Hauptbremszylinder verdrängt wurde. Damit wird sichergestellt, daß nicht zu viel Volumen in die Radbremsen gelangt, was andernfalls im ABS-Regelfall dazu führt, daß der Druck nicht vollständig abgebaut werden kann.

Bei besonders hohen Betätigungsgeschwindigkeiten kann es sinnvoll sein, den vorbestimmten Betätigungsweg zu reduzieren, um nicht zu viel Volumen in die Radbremsen gelangen zu lassen. Die Länge der zeitlichen Verzögerung wird dann durch den Zeitpunkt des Erreichens des vorbestimmbaren Betätigungsweges des Hauptbremszylinders begrenzt.

In jedem Fall kann das in die Radbremsen verdrängte Volumen (wichtig für die Schätzung der Raddrücke) aus der Volumenbilanz zwischen dem vom Hauptbremszylinder verdrängten Volumen und den von den Bremdruckgebern verdrängten Volumen ermittelt werden.

Für den Fall, daß die Volumina, sich nicht gleichmäßig oder nicht reproduzierbar in die vier Radbremsen verteilen, kann zur Aufrechterhaltung einer guten Bremskraftverteilung das verzögerte Schließen der Trennventile auf die Vorderachse begrenzt werden.

Die Ermittlung des Volumens, welches von der Simulatorkammer aufgenommen wird, kann direkt über einen Positionssensor, der den Simulatorkolben sensiert (Kolbenfläche bekannt) oder indirekt über den Drucksensor und einer in der Elektronik abgelegten Volumen-Druck-Kennlinie erfolgen.

Die Sensierung der Position des Simulatorkammerkolbens stellt im Vergleich zum Drucksensor eine kostengünstige Alternative zur redundanten Erfassung des Fahrerverzögerungswunsches dar.

Das aus der oben beschriebenen Volumenbilanz kontinuierlich ermittelte zusätzliche Flüssigkeitsvolumen in den Radbremsen kann für die Schließung der Trennventile herangezogen werden. Hierdurch kann erreicht werden, daß durch die Trennventile nur ein definiertes Volumern in die Radbremsen gelangt.

Im Rahmen des erfindungsgemäßen Verfahrens kann außerdem noch die Geschwindigkeit der Bremsdruckgeberkolben ermittelt werden.

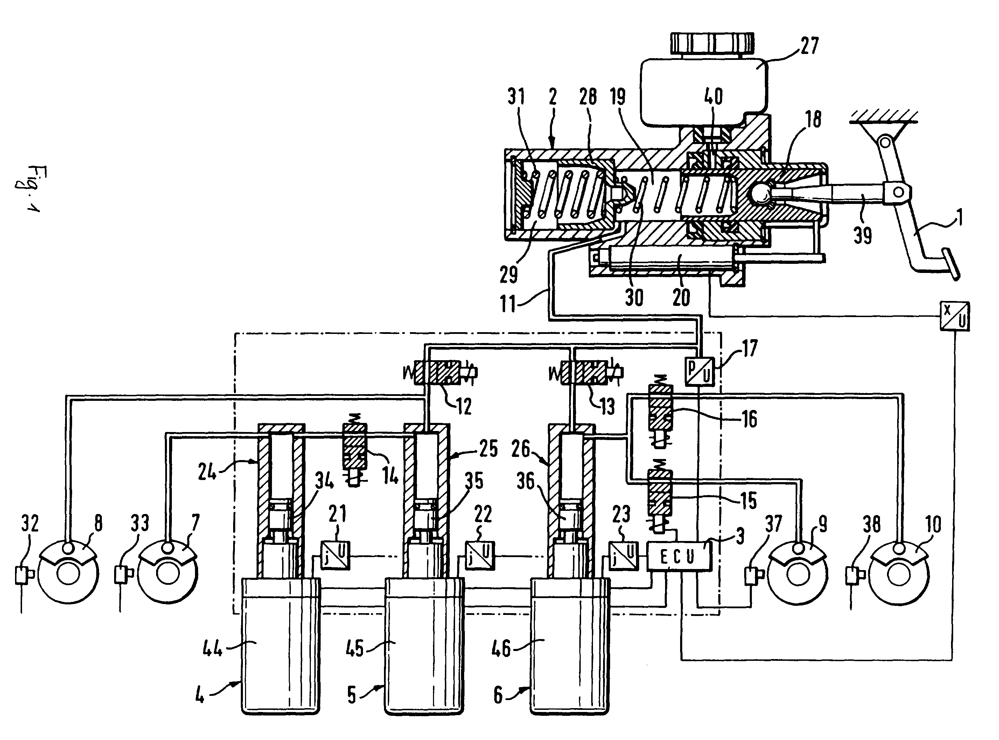

Die Erfindung wird im nachfolgenden Text an einem Ausführungsbeispiel im Zusammenhang mit der beiliegenden Zeichnung näher erläutert.

In der Zeichnung zeigt die einzige Figur eine Ausführung einer blockiergeschützten Kraftfahrzeugbremsanlage, mit der das erfindungsgemäße Verfahren realisiert werden kann.

Das in der einzigen Figur der Zeichnung dargestellte, elektronisch regelbare Bremsbetätigungssystem weist einen einkreisigen Hauptbremszylinder 2 auf, dessen durch eine Rückstellfeder 30 entgegen der Betätigungsrichtung vorgespannter Kolben 18 mittels einer an ein Betätigungspedal 1 angekoppelten Kolbenstange 39 verschiebbar ist und einen Druckraum 19 begrenzt, der andererseits von einem mittels einer zweiten Rückstellfeder 31 vorgespannten Simulatorkolben 28 begrenzt wird. Der Simulatorkolben 28 begrenzt andererseits eine hydraulische Simulatorkammer 29, die beim Verschieben des Bremszylinderkolbens 18 das aus dem Druckraum 19 verdrängte Druckmittelvolumen aufnimmt. Der Druckraum 19 ist über eine Nachlaufbohrung 40 mit einem drucklosen Druckmittelvorratsbehälter 27 verbindbar.

An den Druckraum 19 des Hauptbremszylinders 2 sind mittels einer hydraulischen Leitung 11 sowohl der ersten Fahrzeugachse, beispielsweise der angetriebenen Vorderachse, zugeordnete Radbremsen 7,8 als auch der zweiten Fahrzeugachse, beispielsweise der nicht angetriebenen Hinterachse, zugeordneten Radbremsen 9,10 angeschlossen. Die der Vorderachse zugeordnete Radbremsen 7,8 sind an je einen elektromechanisch betätigbaren Bremsdruckgeber 4,5 angeschlossen, während das andere Radbremsenpaar 9,10 gemeinsam mit einem dritten Bremsdruckgeber 6 in Verbindung steht. In dem zu den Vorderachsbremsen 7,8 führenden Abschnitt der hydraulischen Leitung 11 ist dabei ein elektromagnetisch betätigbares erstes Trennventil 12 eingefügt, während in den zu den Hinterachsradbremsen 9,10 ein zweites Trennventil 13 geschaltet ist, so daß die Radbremsen 7,8 bzw. 9,10 vom Hauptbremszylinder 2 getrennt betätigbar sind. In der Verbindung zwischen den zu den Radbremsen 7,8 führenden Ausgängen der Bremsdruckgeber 4,5 ist ein elektromagnetisch betätigbares 2/2-Wegeventil 14 geschaltet, das bei Normalbremsungen einen Druckausgleich zwischen den Radbremsen 7,8 ermöglicht.

Um die in den Radbremsen 9,10 eingesteuerten Drücke radindividuell einstellen zu können, sind den Radbremsen 9,10 elektromagnetisch schaltbare Multiplexventile 15,16 vorgeschaltet.

Alle drei Bremsdruckgeber 4,5,6 sind von ihrem Aufbau her gleich und bestehen aus je einem einfachen Hydraulikzylinder 24,25,26, in dem je ein Kolben 34,35,36 verschiebbar geführt ist, der durch je einen vorzugsweise reversierbaren Gleichstrommotor 44,45,46 antreibbar ist.

Der gemeinsamen Ansteuerung der Gleichstrommotoren 44,45,46 sowie der Elektromagnetventile 12,13,14,15,16 dient eine elektronische Steuereinheit 3, der als Eingangssignale die Ausgangssignale eines den Betätigungsweg des Betätigungspedals 1 sensierenden Wegsensors 20 sowie eines an den Druckraum 19 des Hauptbremszylinders 2 angeschlossenen Drucksensors 17 zugeführt werden. Als weitere Eingangssignale werden der Steuereinheit 3 Informationen über den Betätigungsweg der Bremsdruckgeberkolben 34,35,36 zugeführt, die von schematisch angedeuteten Weg- bzw. Lagesensoren 21,22,23 zur Verfügung gestellt werden. Außerdem sind den einzelnen, nicht gezeigten Fahrzeugrädern Radsensoren 32,33,37,38 zugeordnet, deren der jeweiligen Rageschwindigkeit entsprechende Ausgangssignale als weitere Eingangsgrößen der elektronischen Steuereinheit 3 zugeführt werden.

Das in der Zeichnung dargestellte Bremsbetätigungssystem funktioniert wie folgt:

Wird ein Bremsvorgang durch Niederdrücken des Bremsbetätigungspedals 1 eingeleitet, so wird der Betätigungszustand vom Wegsensor 20 erkannt und der elektronischen Steuereinheit 3 mitgeteilt, deren Steuersignale eine Ansteuerung der Bremsdruckgeber 4,5 und 6 bewirken. Die Information über den Betätigungsweg des Hauptbremszylinderkolbens 18, der seine Position bestimmt, wird zusammen mit den Ausgangssignalen der Lage- bzw. Wegsensoren 21,22,23, die der Position der Bremsdruckgeberkolben 34,35 und 36 entsprechen, der elektronischen Steuereinheit 3 zugeführt, die daraus vom Hauptbremszylinder 2 sowie den Bremsdruckgebern 4,5,6 geförderte Druckmittelvolumenströme ermittelt und weitere Steuersignale erzeugt, die ein Umschalten der Trennventile 12,13 und dadurch eine Trennung der Bremsdruckgeber 4,5 und 6 vom Hauptbremszylinder 2 bewirken. Das Schließen der Trennventile 12,13 erfolgt ab einer bestimmten Betätigungsgeschwindigkeit nicht sofort, sondern erst dann, wenn ein bestimmter Betätigungsweg zurückgelegt wurde, oder ein bestimmtes Volumen aus dem Hauptbremszylinder in die Radbremsen verdrängt wurde, d.h. mit einer gewissen Zeitverzögerung, so daß insbesondere bei einer schnellen Betätigung ein hydraulischer Druck in den Bremsen 7,8,9,10 sehr schnell aufgebaut werden kann. Dabei erscheint es sinnwoll, das dem Betätitungsweg des Hauptbremszylinderkolbens 18 entsprechende Signal in der elektronischen Steuereinheit 3 zeitlich zu differenzieren, so daß eine Information über die Betätigungsgeschwindigkeit des Kolbens 18 gewonnen wird. Durch den Drucksensor 17 erfolgt eine zweite Meldung des Fahrerverzögerungswunsches an die elektronische Steuereinheit 3, die mit der darin installierten Bremskraftverteilung die gewünschten Bremsmomente an den Fahrzeugachsen errechnet. Die den errechneten Bremsmomenten entsprechenden Steuersignale werden den Gleichstrommotoren 44,45,46 der Bremsdruckgeber 4,5,6 zugeführt, die ein Verschieben der Bremsdruckgeberkolben 34,35,36 in Betätigungsrichtung und somit eine Druckerhöhung in den Radbremsen 7 bis 10 einleiten. Das für den Fahrer gewöhnliche, bei einem Bremsvorgang spürbare Pedalgefühl wird durch die Wirkung des im Druckraum 19 des Hauptbremszylinders 2 herrschenden Druckes auf den Simulatorkolben 28 gewährleistet, der entgegen die Kraft der in der Simulatorkammer 29 angeordneten Rückstellfeder 31 verschoben wird. Die in den zu den Radbremsen 9 und 10 führenden Leitungsabschnitten eingefügten Multiplexventile 15,16 bleiben offen.

Der vom Fahrer aufgebrachte Druck im Tandemhauptzylinder kann auch gewonnen werden, in dem der Weg des Simulatorkolbens 28 ermittelt und unter Bezugsnahme auf die bekannte Druck-Weg-Kennlinie der Simulatorkammern 29 ausgewertet wird.

Ein Druckabbau erfolgt durch Zurückfahren der Bremsdruckgeberkolben 34,35,36, u. U. durch aktive Drehrichtungsumkehr der Gleichstrommotoren 44,45,46. Das vom Fahrer in die Radbremsen 7 bis 10 eingebrachte Druckmittel-Zusatzvolumen wird insbesondere in der Druckabbauphase einer ABS-Regelung von den Hydraulikzylindern 24,25,26 aufgenommen, deren Kolben 34,35,36 einen bestimmten Rückhub über die Ausgangslage hinaus ausführen können. Eine Druckhaltephase wird realisiert, indem die Multiplexventile 15,16 in ihre Sperrstellung umgeschaltet werden, bzw. die Gleichstrommotoren in ihrer Position verharren.

Eine ABS-Regelung wird demnach dreikanalig (Vorderachsezweikanalig, Hinterachse-einkanalig) im Regelmodus mit den Raddrehzahlsensoren 32,33,37,38 durchgeführt, wobei die Bremsdruckmodulation an der Hinterachse beispielsweise nach dem "Select-Low"-Prinzip erfolgen kann.

Bei einer Antriebsschlupfregelung oder bei einer Fahrstabilitätsregelung werden die Trennventile 12,13 im Multiplex-Modus angesteuert.

Bei einem Ausfall der Elektronik/Fahrzeugelektrik sind alle Ventile in dem stromlosen Zustand. Dabei werden beide der Vorderachse zugeordneten Radbremsen 7,8 über die stromlos offenen Ventile 14,12 mit dem Hauptbremszylinder 2 verbunden, so daß die gesetzlich geforderten Bestimmungen bei Ausfall der Elektronik erfüllt werden.

Bei einem hydraulischen Ausfall des der Vorderachse zugeordneten Bremskreises kann immer mit dem der Hinterachse zugeordneten Kreis die gesetzlich geforderte Bremswirkung "brake-by-wire" erreicht werden. Bei Ausfall des der Hinterachse zugeordneten hydraulischen Kreises ist durch die Verwendung des Wegsensors 20 bzw. des Drucksensors 17 sichergestellt, daß über die angetriebene Vorderachse die Bremswirkung "brake-by-wire" erreicht wird.

### Bezugszeichenliste

- 1: Betätigungspedal
- 2: Hauptbremszylinder
- 3: Steuereinheit
- 4: Bremsdruckgeber
- 5: Bremsdruckgeber
- 6: Bremsdruckgeber
- 7: Radbremse
- 8: Radbremse
- 9: Radbremse
- 10: Radbremse
- 11: Leitung
- 12: Trennventil
- 13: Trennventil
- 14: 2/2-Wegeventil
- 15: Multiplexventil
- 16: Multiplexventil
- 17: Drucksensor
- 18: Hauptzylinderkolben
- 19: Druckraum
- 20: Wegsensor
- 21: Weg- bzw. Lagesensor
- 22: Weg- bzw. Lagesensor
- 23: Weg- bzw. Lagesensor
- 24: Hydraulikzylinder
- 25: Hydraulikzylinder
- 26: Hydraulikzylinder
- 27: Druckmittelvorratsbehälter
- 28: Simulatorkolben
- 29: Simulatorkammer
- 30: Rückstellfeder
- 31: Rückstellfeder
- 32: Radsensor
- 33: Radsensor
- 34: Kolben
- 35: Kolben
- 36: Kolben
- 37: Radsensor
- 38: Radsensor
- 39: Kolbenstange

## Patentansprüche

1. Verfahren zum Betrieb eines elektronisch regelbaren Bremsbetätigungssystems für blockiergeschützte Kraftfahrzeugbremsanlagen, mit einem mittels eines Betätigungspedals (1) betätigbaren Hauptbremszylinder (2), mit durch eine elektronische Steuereinheit (3) betätigbaren Bremsdruckgebern (4,5,6), an die Radbremsen (7,8,9,10) des Fahrzeuges angeschlossen sind und die über mittels elektromagnetisch schaltbarer, durch die elektronische Steuereinheit (3) ansteuerbarer Trennventile (12,13) absperrbare hydraulische Verbindungen (11) mit dem Hauptbremszylinder (3) verbindbar sind, mit mindestens einer Sensoreinrichtung (20) zur Erkennung des Fahrerverzögerungswunsches sowie mit mindestens einer mit dem Hauptbremszylinder (3) zusammenwirkenden, von einem Kolben (28) begrenzten Simulatorkammer (29), wobei beim Einleiten eines Bremsvorgangs die Trennventile (12,13) mit einer zeitlichen Verzögerung geschaltet werden und ein die am Betätigungspedal (1) auftretende Geschwindigkeit repräsentierendes Signal ermittelt wird, dadurch **gekennzeichnet**, daß die Bremsdruckgeber (4,5,6) elektromechanisch betätigbar ausgebildet sind und ihre Bremsdruckgeberkolben (34,35,36) nach Beendigung des Bremsvorgangs in eine Ausgangslage bringbar sind, die einen Rückhub ermöglicht, wobei an die Bremsdruckgeber (4,5) die Radbremsen (7,8) direkt angeschlossen sind, daß beim Einleiten eines Bremsvorgangs ein die Position des Hauptbremszylinderkolbens (18) repräsentierendes Siqnal ermittelt wird und daß die Länge der zeitlichen Verzögerung, mit der die Trennventile (12,13) nach dem Einleiten des Bremsvorgangs geschlossen werden, aus mindestens einem der die am Betätigungspedal (1) auftretende Geschwindigkeit und die Position des Hauptbremszylinderkolbens (18) repräsentierenden Signale ermittelt wird.

2. Verfahren nach Anspruch 1, dadurch **gekennzeichnet**, daß zur Ermittlung der Position des Hauptbremszylinderkolbens (18) der Betätigungsweg am Betätigungspedal (1) sensiert wird.

3. Verfahren nach Anspruch 1, dadurch **gekennzeichnet**, daß das dem Betätigungsweg entsprechende Signal zur Ermittlung der Betätigungsgeschwindigkeit einer zeitlich differenzierenden Verarbeitung unterworfen wird.

4. Verfahren nach Anspruch 1, dadurch **gekennzeichnet**, daß die Länge der zeitlichen Verzögerung nahe Null ist, wenn das die Betätigungsgeschwindigkeit repräsentierende Signal einen vorbestimmten Wert nicht überschreitet.

5. Verfahren nach Anspruch 4, dadurch **gekennzeichnet**, daß der vorbestimmte Wert bei niedriger Bordnetzspannung kleiner ist, als bei hoher Bordnetzspannung.

6. Verfahren nach Anspruch 4, dadurch **gekennzeichnet**, daß ein die Betätigungsgeschwindigkeit der elektromechisch betätigbaren Bremdruckgeber (4,5,6) repräsentierendes Signal ermittelt wird und daß der vorbestimmte Wert bei niedriger Betätigungsgeschwindigkeit kleiner ist, als bei hoher Betätigungsgeschwindigkeit.

7. Verfahren nach Anspruch 1, dadurch **gekennzeichnet**, daß die Länge der zeitlichen Verzögerung durch den Zeitpunkt des Erreichens eines vorbestimmten Betätigungsweges des Hauptbremszylinders (2) begrenzt wird.

8. Verfahren nach Anspruch 7, dadurch **gekennzeichnet**, daß der vorbestimmte Betätigungsweg durch das die Betätigungsgeschwindigkeit repräsentierende Signal beeinflußt wird.

9. Verfahren nach einem der vorhergehenden Ansprüche, dadurch **gekennzeichnet**, daß das Flüssigkeitsvolumen, welches aus dem Hauptbremszylinder (2) über die Trennventile (12,13) in die Radbremsen (7,8,9,10) verdrängt wird, aus der Differenz zwischen dem vom Hauptbremszylinderkolben (18) verdrängte Volumen und dem von der Simulatorkammer (29) aufgenommenen Volumen berechnet wird.

10. Verfahren nach Anspruch 9, dadurch **gekennzeichnet**, daß der Druck, der auf den Kolben (28) der Simulatorkammer (29) wirkt, gemessen wird, und das von der Simulatorkammer (29) aufgenommene Volumen indirekt aus einer in der elektronischen Steuereinheit abgelegten Druck-Volumenkennlinie der Simulatorkammer (29) ermittelt wird.

11. Verfahren nach Anspruch 9, dadurch **gekennzeichnet**, daß die Position des Kolbens (28) Simulatorkammer (29) ermittelt wird und daraus das aufgenommene Volumen der Simulatorkammer (29) berechnet wird.

12. Verfahren nach einem der vorhergehenden Ansprüche, dadurch **gekennzeichnet**, daß die Position des Kolbens (28) der Simulatorkammer (29) gemessen wird und daraus der Fahrerverzögerungswunsch ermittelt wird.

13. Verfahren nach Anspruch 9, dadurch **gekennzeichnet**, daß die Länge der zeitlichen Verzögerung durch den Zeitpunkt des Erreichens eines vorbestimmten Flüssigkeitsvolumens, welches aus dem Hauptbremszylinder (2) über die Trennventile (12,13) in die Radbremsen (7,8,9,10) verdrängt wird, bestimmt wird.

14. Verfahren nach einem der vorhergehenden Ansprüche, wobei ein Trennventil (12) den Radbremsen (7,8) der Vorderräder des Fahrzeuges zugeordnet ist, dadurch **gekennzeichnet**, daß gegebenenfalls nur das den Vorderrädern zugeordnete Trennventil (12) zeitlich verzögert geschlossen wird.

## Claims

1. Method of operation of an electronically controllable brake actuation system for anti-lock automotive vehicle brake systems, which includes a master brake cylinder (2) operable by an actuating pedal (1), braking pressure generators (4,5,6) which are operable by an electronic control unit (3), to which braking pressure generators are connected wheel brakes (7,8,9,10) of a vehicle and which are connectable to the master brake cylinder (3) by way of hydraulic connections (11) closable by electromagnetic separating valves (12, 13) that are operable by the electronic control unit (3), at least one sensor device (20) for identification of the driver's wish for deceleration, and at least one simulator chamber (29) which interacts with the master brake cylinder (3) and is defined by a piston (28), wherein upon initiation of a braking operation, the separating valves (12, 13) are operated with time delay and a signal representative of the speed occurring at the actuating pedal (1) is determined,
characterized in that the braking pressure generators (4, 5, 6) are configured so as to be operable electromechanically and their braking pressure generator pistons (34,35,36) are movable into an initial position which permits a return stroke upon completion of the braking operation, wherein the wheel brakes (7,8) are directly connected to the braking pressure generators (4,5), in that upon commencement of a braking operation, a signal representative of the position of the master brake cylinder piston (18) is produced, and in that the length of the time delay, after which the separating valves (12,13) are closed upon commencement of the braking operation, is determined from at least one of the signals representative of the actuating speed occurring on the actuating pedal (1) and the position of the master brake cylinder piston (18).

2. Method as claimed in claim 1,
characterized in that the actuating travel on the actuating pedal (1) is sensed to determine the position of the master brake cylinder piston (18).

3. Method as claimed in claim 1,
characterized in that the signal representative of the actuating travel is subjected to a time derivative processing operation to determine the actuating speed.

4. Method as claimed in claim 1,
characterized in that the length of the time delay is almost zero when the signal representative of the actuating speed does not exceed a predetermined value.

5. Method as claimed in claim 4,
characterized in that the predetermined value is smaller at a low voltage of the vehicle electrical system than at a high voltage of the vehicle electrical system.

6. Method as claimed in claim 4,
characterized in that a signal representative of the actuating speed of the electromechanically operable braking pressure generators (4, 5, 6) is determined, and in that the predetermined value is smaller at a low actuating speed than at a high actuating speed.

7. Method as claimed in claim 1,
characterized in that the length of the time delay is limited by the time of reaching a predetermined actuating travel of the master brake cylinder (2).

8. Method as claimed in claim 7,
characterized in that the predetermined actuating travel is influenced by the signal representative of the actuating speed.

9. Method as claimed in any one of the preceding claims,
characterized in that the fluid volume which is conducted from the master brake cylinder (2) into the wheel brakes (7, 8, 9, 10) by way of the separating valves (12, 13) is calculated from the difference between the fluid volume discharged from the master brake cylinder piston (18) and the fluid volume taken up by the simulator chamber (29).

10. Method as claimed in claim 9,
characterized in that the pressure which acts upon the piston (28) of the simulator chamber (29) is measured, and the fluid volume taken up in the simulator chamber (29) is determined indirectly from a pressure/fluid volume characteristic curve of the simulator chamber (29) memorized in the electronic control unit.

11. Method as claimed in claim 9,
characterized in that the position of the piston (28) of the simulator chamber (29) is determined and the fluid volume taken up in the simulator chamber (29) is calculated therefrom.

12. Method as claimed in any one of the preceding claims,
characterized in that the position of the piston (28) of the simulator chamber (29) is measured and the driver's wish for deceleration is determined from this measurement.

13. Method as claimed in claim 9,
characterized in that the length of the time delay is determined by the time of reaching a predefined fluid volume which is conducted from the master brake cylinder (2) to the wheel brakes (7, 8, 9, 10) by way of the separating valves (12, 13).

14. Method as claimed in any one of the preceding claims, wherein a separating valve (12) is associated with the wheel brakes (7, 8) of the front wheels of the vehicles, characterized in that only the separating valve (12) associated with the front wheels is closed with time delay, if required.

## Revendications

1. Procédé pour faire fonctionner un système d'actionnement de freins, réglable par voie électronique, pour des installations de freinage de véhicules automobiles, protégées contre un blocage, comportant un maître-cylindre de frein (2) pouvant être actionné à l'aide d'une pédale d'actionnement (1), des transmetteurs (4,5,6) de la pression de freinage pouvant être actionnés par une unité de commande électronique (3) et auxquels sont raccordés des freins de roues (7,8,9,10) du véhicule et qui peuvent être reliés au maître-cylindre de frein (3) par l'intermédiaire de liaisons hydrauliques (11) qui peuvent être bloquées au moyen de soupapes de sectionnement (12,13) pouvant être commutées par voie électromagnétique et pouvant être commandées par une unité de commande électronique (3), et comportant au moins un dispositif de détection (20) servant à identifier le désir de décélération d'un conducteur, ainsi qu'au moins une chambre de simulateur (29) qui coopère avec le maître-cylindre de frein (3) et est limitée par un piston (28), auquel cas lors du déclenchement d'une opération de freinage, les soupapes de sectionnement (12,13) sont commutées avec un certain retard, et un signal, qui représente la vitesse apparaissant au niveau de la pédale d'actionnement (1), est déterminé, caractérisé en ce que les transmetteurs (4,5,6) de la pression de freinage sont agencés de manière à pouvoir être actionnés par voie électromagnétique et leurs pistons (34,35,36) peuvent être amenés, à la fin de l'opération de freinage, dans une position initiale qui permet une course de retour, les freins de roues (7,8) étant raccordés directement aux transmetteurs (4,5) de la pression de freinage de telle sorte que lors du déclenchement d'un processus de freinage, un signal représentant la position du piston (18) du maître-cylindre de frein est déterminé et que la durée du retard, avec lequel les soupapes de sectionnement (12,13) sont fermées après le déclenchement du processus de freinage, est déterminée à partir d'au moins l'un des signaux qui représentent la vitesse, qui apparaît au niveau de la pédale d'actionnement (1), et la position du piston (18) du maître-cylindre de frein.

2. Procédé selon la revendication 1, caractérisé en ce que pour la détermination de la position du piston (18) du maître-cylindre de frein, la course d'actionnement est détectée au niveau de la pédale d'actionnement (1).

3. Procédé selon la revendication 1, caractérisé en ce que le signal, qui correspond à la course d'actionnement, et qui sert à déterminer la vitesse d'actionnement, est soumis à un traitement de différentiation dans le temps.

4. Procédé selon la revendication 1, caractérisé en ce que la durée du retard est presque nulle lorsque le signal représentant la vitesse d'actionnement ne dépasse pas vers le haut une valeur prédéterminée.

5. Procédé selon la revendication 4, caractérisé en ce que la valeur prédéterminée est plus faible dans le cas d'une faible tension du réseau de bord que dans le cas d'une tension élevée du réseau de bord.

6. Procédé selon la revendication 4, caractérisé en ce qu'un signal, qui représente la vitesse d'actionnement des transmetteurs (4,5,6) de la pression de freinage pouvant être actionnés par voie électromécanique, est déterminé et que la valeur prédéterminé est plus faible dans le cas d'une vitesse d'actionnement faible que dans le cas d'une vitesse d'actionnement élevée.

7. Procédé selon la revendication 1, caractérisé en ce que la durée du retard est limitée par l'instant où une course d'actionnement prédéterminée du maître-cylindre de frein (2) est atteinte.

8. Procédé selon la revendication 7, caractérisé en ce que la course prédéterminée d'actionnement est influencée par le signal représentant la vitesse d'actionnement.

9. Procédé selon l'une des revendications précédentes, caractérisé en ce que le volume de liquide, qui est refoulé hors du maître-cylindre de frein (2) dans les freins de roues (7,8,9,10) par l'intermédiaire des soupapes de sectionnement (12,13), est calculé à partir de la différence entre le volume refoulé par le piston (18) du maître-cylindre de frein et le volume absorbé par la chambre de simulateur (29).

10. Procédé selon la revendication 9, caractérisé en ce qu'on mesure la pression qui agit sur le piston (28) de la chambre de simulateur (29) et qu'on détermine indirectement le volume, formé par la chambre de simulateur (29), à partir d'une courbe caractéristique pression-volume, mémorisée dans l'unité de commande électronique, de la chambre de simulateur (29).

11. Procédé selon la revendication 9, caractérisé en ce qu'on détermine la position du piston (28) de la chambre de simulateur (29) et qu'on calcule, à partir de là, le volume absorbé par la chambre de simulateur (29).

12. Procédé selon l'une des revendications précédentes, caractérisé en ce qu'on mesure la position du piston (28) de la chambre de simulateur (29) et qu'on détermine, à partir de là, le désir de décélération du conducteur.

13. Procédé selon la revendication 9, caractérisé en ce qu'on détermine la durée du retard au moyen de l'instant où est atteint un volume de liquide prédéterminé, qui est refoulé depuis le maître-cylindre de frein (2) dans les freins de roues (7,8,9,10) par l'intermédiaire des soupapes de sectionnement (12,13).

14. Procédé selon l'une des revendications précédentes, selon lequel une soupape de sectionnement (12) est associée aux freins (7,8) des roues avant du véhicule, caractérisé en ce qu'éventuellement seule la soupape de sectionnement (12) associée aux roues avant est fermée d'une manière retardée.
